# EUROPEAN PATENT SPECIFICATION

(11) **EP 1 698 459 B1**
(45) Date of publication and mention of the grant of the patent: **11.06.2008**
(21) Application number: 06110004.6
(22) Date of filing: 16.02.2006
(51) Int. Cl.: B32B 27/30, B32B 27/36, C08L 27/08

(54) **Multilayer films**
Mehrschichtfolien
Films multicouches

(30) Priority: 04.03.2005 EP 05101671
(43) Date of publication of application: 06.09.2006
(60) Divisional application: 07121811.9
(73) Proprietor: Cryovac, Inc., Duncan, S.C. 29334 (US)
(72) Inventor: Spigaroli, Romano, 20025, Legnano (MI) (IT)
(74) Representative: Ferri, Isabella

(56) References cited:
- GB-A- 1 421 233

## Description

### Technical Field

The present invention relates to a multilayer polymeric film comprising a novel vinylidene chloride polymer composition.

### Disclosure of Invention

Multilayer polymeric films comprising vinylidene chloride polymers have been used for many years for the packaging of food and medical products due to the excellent gas- and odour-barrier properties of the vinylidene chloride polymers. One of the major drawbacks in the use of vinylidene chloride polymers in the production of films via, for instance, extrusion or extrusion lamination is their relative low thermal stability. In fact, upon exposure to the common processing temperatures vinylidene chloride polymers tend to decompose generating carbons, gaseous hydrogen chloride and discoloration. Copolymers of vinylidene chloride tend to be somewhat more thermally stable than the homopolymers; nevertheless to be successfully extruded vinylidene chloride polymers must be stabilized. Typically, up to 10 weight percent of stabilizers are added to improve the processability of vinylidene chloride polymers. The amount of stabilizers however has to be finely balanced against the deterioration of the gas-barrier properties of the vinylidene chloride polymers as the permeability of the vinylidene chloride polymers, in particular the permeability to oxygen, increases with increasing amounts of stabilizers.

The term "stabilizer" is used herein to refer in general to the additive or group of additives incorporated in a base polymer to improve its thermal stability. In the case of vinylidene chloride polymers, the mechanism through which a stabilizer can be effective include for instance absorption or reaction with evolved hydrogen chloride, reaction with colour-producing conjugated polymer sequences to prevent discoloration, scavenging of chlorine atoms and other free radicals, chelation of metals (eg. iron) to prevent chlorine coordination and the like. An important mechanism involved in the stabilization is the reduction of glass transition temperature and softening point of the polymer that allows for easier processing of the polymer itself. Additives that perform this function are generally referred to as "plasticizers".

In general the stabilizers and/or plasticizers used for the modification of vinylidene chloride polymers are in the form of waxes or highly viscous liquids, such as epoxidised soybean oil or linseed oil.

Low molecular weight additives however have a tendency to migrate through the polymer matrix and, in the case of multilayer films, through adjacent layers to reach the film surface. In the case of food packaging this is particularly unwelcome since they could migrate from the packaging film to the packaged food. Even when harmless materials are used, the migration of additives into the packaged food is not only undesirable from a sanitary point of view but also in contrast with most regulations in the area of food safety.

Furthermore, from an operational point of view, the addition of liquids, in particular highly viscous liquids, to a polymer matrix is generally burdensome. In the case of vinylidene chloride polymers which are often supplied as free-flowing powders, the addition of liquid additives is particularly difficult as special care has to be taken to avoid the formation of lumps and consequently of non-homogeneous blends.

Therefore, it would be of a great benefit to find a stabilizer and/or plasticizer for the production of vinylidene chloride polymer films that is effective when added in solid form, thereby reducing the risk of migration of the additives to the surface of the films and improving the film manufacturing process. As an added value, said stabilizer and/or plasticizer should also have a lower, or at least equal, impact on the film barrier properties than the standard additives.

We have now found that the use of solid poly[oxy(1-oxo-1,6-hexanediyl)] (polycaprolactone) to stabilize vinylidene chloride polymers offers an advantageous solution to the above-mentioned problems: solid polycaprolactones have a low or negligible tendency to migrate towards the surface of the film, furthermore, the use of a stabilizer in solid rather than in liquid form greatly reduces the time and effort required for blending said stabilizer with the base polymer.

The use of lactone polyesters and in particular polycaprolactones as plasticizers for vinyl resins, such as PVC, is known in the prior art. For instance US 3,274,143 describes the use of liquid lactone polyesters, with an average molecular weight from about 300 to about 9,000, for the preparation of plasticized vinyl resins. US 4,889,892 describes flexible compositions comprising copolymers of vinyl chloride and alkyl acrylates and polycaprolactone. Compositions comprising 2 to 6 weight percent of polycaprolactone and vinylidene chloride-vinyl chloride copolymers were described as adhesives for textile applications in GB 1,421,233, with no mention of the additive migration characteristics of the composition, its thermal stability or its gas barrier properties.

A first object of the present invention is a multilayer film, which comprises at least one layer of a vinylidene chloride polymer composition comprising from 0.5 to 20.0% by weight of solid polycaprolactone based on the total weight of the vinylidene chloride polymer composition, said layer having been coextruded with at least one other layer.

As used herein, the term "vinylidene chloride polymer" refers to homopolymers of vinylidene chloride as well as to copolymers, terpolymers etc. of vinylidene chloride and one or more monoethylenically unsaturated monomers, wherein vinylidene chloride is the major component, and blends thereof. Monoethylenically unsaturated monomers suitable for use in the present invention include alkyl acrylates, alkyl methacrylates, acrylic acid, methacrylic acid, vinyl chloride, acrylonitrile. Preferably the monoethylenically unsaturated monomers are selected from the group of alkyl acrylates and alkyl methacrylates having from 1 to 4 carbon atoms per alkyl group and vinyl chloride. More preferably the monoethylenically unsaturated monomers are selected from the group of methyl acrylates and vinyl chloride. Most preferred vinylidene chloride polymers are vinylidene chloride methyl acrylate copolymers comprising from 1 to 10 % by weight of methyl acrylate, and blends thereof.

The vinylidene chloride polymer composition suitable for the multilayer films of the present invention comprises from 0.5 to 20.0% by weight of solid polycaprolactone based on the total weight of the vinylidene chloride polymer composition, preferably from 0.5 to 18.0%, 16.0%, 14.0%, 12.0%, 10.0%, from 0.8 to 9.0%, from 0.8 to 8.0%, from 1.0 to 7.0% by weight.

Polycaprolactones are prepared by the polymerization reaction of a lactone, or combination of lactones, having six carbon atoms in the ring. Lactones having substituents other than hydrogen on the carbon atoms in the ring can be used as starting material, however the larger the number of substituents the lower the stability of the resulting polymer. For the scope of the invention unsubstituted ε-caprolactone, in which all the carbon atoms have hydrogen substituents, is the preferred monomer.

Polycaprolactones can be produced in a wide range of molecular weights. Polycaprolactones with an average molecular weight from about 300 to about 8,000 are either liquids or waxy solids at room temperature. Polycaprolactones with a higher average molecular weight, e.g. from about 10,000 to about 100,000 are solid crystalline thermoplastic polymers. The use of the higher molecular weight crystalline polymers has been found to be particularly advantageous in the production of multilayer films. The high molecular weight, in fact, reduces the tendency of the stabilizer to migrate towards the surface of the film thereby reducing the risk of product contamination. Furthermore, the use of a stabilizer in solid rather than in liquid form greatly reduces the time and effort required for blending said stabilizer with the base polymer. Suitable polycaprolactones are therefore those with an average molecular weight greater than 10,000, preferably in the range from 25,000 to 100,000, more preferably from 35,000 to 90,000, and even more preferably from 45,000 to 85,000. Examples of suitable polycaprolactones are the ones produced and sold by Solvay S.A. under the trade name CAPA®.

The vinylidene chloride polymer composition can be prepared by directly blending the vinylidene chloride base polymer with polycaprolactone using conventional dry blending equipment.

The composition used as one of the layers of the film of the present invention may further comprise other conventional additives such as UV stabilizers, hydrotalcites, magnesium oxide or hydroxide, zeolites etc.

The multilayer film of the present invention comprises at least two layers: a first layer comprising the vinylidene chloride polymer composition and an additional layer, for instance a heat-sealable layer. Alternatively, the multilayer film can be a three-layer structure with the vinylidene chloride polymer composition forming the core layer. The outer layers, on opposing sides of the core layer, can have the same or different compositions. For instance, one layer can be a heat-sealable layer and the other an abuse resistant layer. Additional layers may be present. The film may further comprise an intermediate layer between the heat-sealable layer and the vinylidene chloride polymer composition layer to provide a four-layer structure.

In an alternative embodiment the film of the present invention is a five-layer structure. This comprises a heat-sealable layer, a first intermediate layer between the heat-sealable and barrier layers, the barrier layer, a second intermediate layer between the barrier and abuse-resistant layers and the abuse-resistant layer. In this embodiment, the heat-sealable and the abuse-resistant layer can have the same or different compositions.

In a further alternative embodiment the film of the present invention has a six-layer structure. This comprises a heat-sealable layer, first and second intermediate layers between the heat-sealable and barrier layers, the vinylidene chloride copolymer barrier layer, a third intermediate layer between the barrier and abuse-resistant layers, and the abuse-resistant layer. Seven or more layers can however be present depending on the final application.

Generally, the multilayer film of the invention has only one barrier layer, however in some instances two or more barrier layers could be present. In such a case, at least one of the barrier layers will comprise the vinylidene copolymer composition comprising from 0.5 to 20.0% by weight of solid polycaprolactone and the remaining barrier layers will have the same or a different composition.

In general, the film of the present invention will have a total thickness up to 150 µm, preferably up to 100 µm and even more preferably up to 90 µm. Typically, the multilayer films of the present invention have thicknesses from 10 to 150 µm, preferably from 15 to 100 µm and more preferably from 25 to 80 µm.

The heat-sealable layer used in the film of the present invention may be any conventional heat-sealable layer. Such a layer may for example be an ethylene/alpha-olefin copolymer, ethylene vinyl acetate copolymer, ionomer, ethylene acrylic acid copolymer (EAA), ethylene methacrylic acid copolymer (EMAA), propylene copolymer, or blends thereof. In this specification the term "ethylene/alpha-olefin copolymer" includes copolymers of ethylene and one or more comonomers selected from C₃ to C₂₀ alpha-olefins, such as 1-butene, 1-pentene, 1-hexene, 1-octene, 4-me thyl-1-pentene and the like. Ethylene/alpha-olefin copolymers generally have a density in the range of from about 0.86 to about 0.94 g/cm³. The term linear low density polyethylene (LLDPE) is generally understood to include that group of ethylene/alpha-olefin copolymers which fall into the density range of about 0.915 to about 0.94 g/cm³ and particularly about 0.915 to about 0.925 g/cm³. Sometimes linear polyethylene in the density range from about 0.926 to about 0.94 g/cm³ is referred to as linear medium density polyethylene (LMDPE). Lower density ethylene/alpha-olefin copolymers may be referred to as very low-density polyethylene (VLDPE) and ultra-low density polyethylene (ULDPE). Ethylene/alpha-olefin copolymers may be obtained by either heterogeneous or homogeneous polymerization processes. Heterogeneous processes afford products with relatively wide molecular weight distribution (M_{w}/Mₙ greater than 3.0) and composition distribution. Heterogeneous copolymers typically contain a relatively wide variety of main chain lengths and comonomer percentages. On the other hand, homogeneous processes afford products with relatively narrow molecular weight distribution (M_{w}/Mₙ less than 3.0) and composition distribution. Heterogeneous polymers may be prepared, for instance, with Ziegler-Natta catalysts. Homogeneous polymers are typically prepared using metallocene or other single-site catalysts.

The term "ethylene-vinyl acetate copolymer" refers to a copolymer formed from ethylene and vinyl acetate monomers wherein the ethylene units are present in a major amount and the vinyl acetate units are present in a minor amount.

The term "ionomer" refers to, for example, a copolymer of ethylene with a copolymerisable ethylenically unsaturated acidic monomer, usually an ethylenically unsaturated carboxylic acid, which may be di- or mono basic but is generally mono-basic, for example acrylic or methacrylic acid, in its ionised rather than its free acid form, the neutralising cation being any suitable metal ion for example an alkali metal ion, zinc ion or other multivalent metal ion. Surlyn is a Trademark of a suitable ionomer marketed by Du Pont.

The term "propylene copolymer" refers to a copolymer formed from propylene and ethylene and/or one or more C₄ to C₂₀ alpha-olefin monomers wherein the propylene units are present in a major amount and the ethylene and/or alpha-olefin units are present in a minor amount. Typical examples of propylene copolymers are ethylene-propylene copolymers and ethylene-propylene-butene terpolymers.

Preferred polymers for the heat-sealable layer are ethylene/alpha-olefin copolymers with a density in the range of from about 0.86 to about 0.92 g/cm³, ethylene vinyl acetate copolymers, ionomers, propylene copolymers and blends thereof.

The abuse-resistant layer in the film of the invention may include any of the following: ethylene/alpha-olefin copolymers, ethylene vinyl acetate copolymers, propylene copolymers, polyamides and copolyamides, and ionomers. In a particular embodiment, the abuse-resistant layer is a polyamide/copolyamide layer. Suitable polyamide/copolyamide resins may be aliphatic polyamides e.g., polyamide 6, polyamide 11, polyamide 12, polyamide 66, polyamide 69, polyamide 610, polyamide 612, and copolyamides including coplyamide 6/9, coplyamide 6/10, coplyamide 6/12, coplyamide 6/66, coplyamide 6/69, and aromatic polyamides and copolyamides, such as 6I, 6I/6T, MXD6, MXD6/MXDI etc. In an alternative embodiment, the abuse-resistant layer is an ionomer layer. It will be understood that blends of resins may be used in place of individual resins in the various layers of the films of the invention, particularly in the heat-sealable and abuse-resistant layers.

An intermediate layer or layers can be present between the outer layers (i.e. heat-sealable and abuse layers) and the barrier layer. Such layers can be for example bulk layers, that is layers able to improve the abuse-resistance, toughness, modulus, etc., of the film. Bulk layers generally comprise polymers that are inexpensive relative to other polymers in the film which provide some specific purpose unrelated to abuse-resistance, modulus, etc. Another type of intermediate layer is a seal-assist layer, which is adjacent to the heat-sealable layer and contributes to the formation of heat seals. Suitable polymers for the intermediate layers are for instance ethylene/alpha-olefin copolymers, ethylene vinyl acetate copolymers, and propylene copolymers. In a particular embodiment, an intermediate layer of ethylene vinyl acetate copolymer is used for example in the four- or five-layer structure described above. The ethylene vinyl acetate copolymer may be modified with, for example, maleic anhydride.

Adhesive or tie layers in the films of the present invention can be any of those known to be useful in adhering adjacent layers of coextruded films. Suitable adhesive layers comprise, for example, chemically modified ethylene polymers for example, copolymers of ethylene with esters of ethylenically unsaturated carboxylic acids, such as alkyl acrylates or methacrylates, graft copolymers of maleic acid or anhydride onto ethylene vinyl acetate copolymers, graft copolymers of fused ring carboxylic anhydrides onto polyethylene, resin mixtures of these and mixtures with polyethylene or copolymers of ethylene and alpha olefin. Such materials include adhesives sold under the tradename Bynel (Du Pont) or Admer (Mitsui).

Additives can be added to one or more layers to enhance their workability and/or other characteristics of the final film. Among these one can mention additives in common use such as antiblock, slip and antifog agents; fluoropolymer-based processing aids; oxygen scavengers etc.

The film may be produced using conventional techniques. Multilayer films may be produced by co-extrusion and optionally monoaxial or, preferably, biaxial orientation.

Orientation may, for example, be effected by the trapped bubble technique, which is well known in the art. The extruded tubular film is cooled and collapsed. The tubular film is subsequently fed through a bath of hot water and, as it leaves the hot water it is inflated and blown into thin tubing. The tubular film is rapidly cooled and then rolled-up for further processing. Alternatively, the film may be oriented by stretching on a tenter frame. Preferably the orientation is carried out at a temperature from 85 to 140° C, more preferably from 90 to 120°C. The orientation ratio may range, depending on the orientation technique, from 2 to 8 in each direction, typically from 2 to 5. Oriented films can be heat shrinkable or heat-set. Heat shrinkable films are preferred.

The multilayer films can optionally be cross-linked by means of irradiation. Generally, the irradiation is performed using high energy electrons to provide a dosage of from 10 to 100 kGy, preferably 30 to 80, for example about 60 kGy. Cross-linking may also be effected in known manner using chemical cross-linking agents. Irradiation can be performed on all the layers of the film at the same time or, alternatively, only on selected layers.

In a preferred embodiment one or more layers of a multilayer film (the substrate) are extruded or co-extruded and subsequently cross-linked by irradiation; and the barrier layer and any further layers are then extruded or co-extruded onto the substrate. In a specific embodiment, using a tubular extrusion set-up a heat-sealable layer and any intermediate layers present between the heat-sealable layer and the barrier layer are co-extruded and these layers are then irradiated by electron bombardment to provide cross-linking and increase the strength of the extruded layers. After irradiation, the barrier layer and remaining layers of the film, including the abuse-layer, are extruded onto the irradiated layers (or substrate). The film may then be monoaxially or, preferably, biaxially oriented.

Alternatively non-heat shrinkable non-oriented films may be produced according to the present invention, for instance using hot-blown or cast extrusion techniques.

In a particular embodiment, the film will be produced using the hot-blown process by the bubble collapse technique that provides for collapsing the bubble obtained by the hot blown method, when the resin inside is still hot, and pressing it so as to obtain a single web with a thickness twice that of the extruded film and an even number of layers with two separate barrier layers. To improve adhesion between the two innermost layers of the coextruded film of the bubble, preferably an ethylene vinyl acetate copolymer with a high content of vinyl acetate is employed.

The invention further provides a method of producing a multilayer film by extrusion, which method comprises the coextrusion of a vinylidene chloride polymer composition according to the invention with at least one other layer. Other layers of the multilayer film may either be co-extruded with the first two layers or optionally laminated or extrusion laminated. The method may also provide for an optional monoaxial or biaxial orientation.

The film of the invention may be used to form a package in conventional manner. For example, when the film is produced as a tubular film, bags can be formed by transverse sealing and cutting across the flattened tubular film to make individual bags. Alternatively, bags may be made by slitting the tubular film along one edge and then transversely sealing and severing the film to produce bags. Other methods of making bags and packages are known and may be readily adapted to use with the multilayer films of the invention.

A package or bag formed from a film according to the present invention may for example be used to package medical products or foodstuff such as cheese, meat or processed meat.

The present invention will now be described in more detail with particular reference to the following Examples. All percentages are by weight unless otherwise specifically noted.

EXAMPLES

The components of the vinylidene chloride polymer compositions of the examples are characterized in Table 1.

**Table 1**

| Name | Characteristics |
|---|---|
| PVDC-MA | Vinylidene chloride methyl acrylate copolymer, 8 % methyl acrylate |
| PCL1 | Polycaprolactone, Mw 37,000, particle size <600 µm |
| PCL2 | Polycaprolactone, Mw 50,000, particle size <600 µm |
| PCL3 | Polycaprolactone, Mw 50,000, particle size <100 µm |
| PCL4 | Polycaprolactone, Mw 80,000, particle size <600 µm |
| ESO | Epoxidised soybean oil |
| HYT | Hydrotalcite |

Preparation of the vinylidene chloride polymer compositions of the invention: Examples 1-8

Vinylidene chloride polymer compositions were prepared by the following procedure: the vinylidene chloride polymer, the polycaprolactone (PCL) and optionally other stabilizers, such as hydrotalcite (HYT), all supplied in powder form, were charged in a small scale mixer and mixed at room temperature for 10 minutes. Exact compositions of the blends are shown in Table 2.

Preparation of the vinylidene chloride polymer compositions of the prior-art: Comparative Examples 1-4

Vinylidene chloride polymer compositions were prepared by the following procedure: the vinylidene chloride polymer was charged in a small-scale mixer and heated with mixing to approximately 50-60 °C under reduced pressure. Epoxidised soyabean oil (ESO), heated at 60-90°C, was sprayed into the mixer. The blend was then allowed to cool to room temperature before adding the hydrotalcite (HYT) that was dry mixed with the blend. Epoxidised soybean oil is a widely used stabilizer/plasticiser for vinylidene chloride polymers. It is often used in conjuction with inorganic additives such as tetrasodium pyrophosphate, magnesium oxide, and hydrotalcites.

Exact compositions of the blends are shown in Table 2.

**Table 2**

| | PVDC-M A | PCL 1 | PCL 2 | PCL 3 | PCL 4 | ESO | HYT |
|---|---|---|---|---|---|---|---|
| Ex. 1 | 98 | 2 | | | | | |
| Ex. 2 | 98 | | 2 | | | | |
| Ex. 3 | 98 | | 1 | | | | 1 |
| Ex. 4 | 98 | | | 2 | | | |
| Ex. 5 | 98 | | | | 2 | | |
| Ex. 6 | 96 | | | 2 | | 2 | |
| Ex. 7 | 96 | | | 4 | | | |
| Ex. 8 | 92 | | | 8 | | | |
| Comp. Ex. 1 | 98 | | | | | 2 | |
| Comp. Ex. 2 | 98 | | | | | 1 | 1 |
| Comp. Ex. 3 | 96 | | | | | 4 | |
| Comp. Ex. 4 | 92 | | | | | 8 | |

It can be seen from these examples that the preparation of the compositions of the invention is more straightforward since it does not require heating and spraying of the ESO, furthermore the risk of lump formation, due to the addition of liquid ESO, is also avoided.

Multilayer films: Examples 9-16 and Comparative Examples 5-8

Multilayer films comprising the blends of Examples 1-8 and Comparative Examples 1-4 were prepared by co-extrusion of a heat-sealable layer (VLDPE, specific gravity of 0.911 g/cm³) and an intermediate layer (ethylene vinyl acetate, 9% vinyl acetate content) to provide a substrate. This substrate was then irradiated using high-energy electrons (64 kGy) to provide crosslinking. After irradiation, a layer of the vinylidene chloride copolymer composition, and an abuse-resistant layer (ethylene vinyl acetate, 9% vinyl acetate content) were extruded onto the substrate. The films were then oriented biaxially, with an orientation ratio of about 3 in the machine direction and about 3.5 in the transverse direction. Orientation was performed by cooling and collapsing the extruded tubular film, feeding the film through a hot water bath (approximately 95°C), inflating the film and blowing into thin tubing. The films were then rapidly cooled and rolled-up for further processing. The total thickness of the films was 53 µm.

Oxygen transmission rates (OTR) of the multilayer films were measured at 23°C and 0% relative humidity according to ASTM 3985. Composition of the barrier layer and OTR values (expressed in cm³/m²/24h for a 5 µm layer thickness) are shown in Table 3.

**Table 3**

| | Vinylidene chloride polymer composition | OTR |
|---|---|---|
| Ex. 9 | Example 1 | 15 |
| Ex. 10 | Example 2 | 13 |
| Ex. 11 | Example 3 | 9 |
| Ex. 12 | Example 4 | 13 |
| Ex. 13 | Example 5 | 12 |
| Ex. 14 | Example 6 | 28 |
| Ex. 15 | Example 7 | 25 |
| Ex. 16 | Example 8 | 85 |
| Comp. Ex. 5 | Comp. Example 1 | 15 |
| Comp. Ex. 6 | Comp. Example 2 | 10 |
| Comp. Ex. 7 | Comp. Example 3 | 34 |
| Comp. Ex. 8 | Comp. Example 4 | 87 |

By directly comparing the OTR values of the films of Examples 9,10, 12 and 13 with the film of Comp. Example 1, the film of Example 15 with the film of Comp. Example 3 and the film of Example 16 with the film of Comp. Example 4 it can be seen that the films of the invention have oxygen barrier properties comparable to the oxygen barrier properties of films produced using standard vinylidene chloride polymer compositions.

During the film production runs it was observed that the thermal stability of vinylidene chloride polymer compositions of the invention is at least comparable and, in some cases, even higher than the thermal stability of vinylidene chloride polymer compositions stabilized with conventional additives.

The films of the invention containing the highest percentage of polycaprolactone, namely the film of Example 16, show a reduced deterioration of the barrier properties with time when compared with the film of Comp. Example 4 (6-10% vs. 20% OTR increase).

## Claims

1. A multilayer film comprising at least one layer of a vinylidene chloride polymer composition comprising from 0.5 to 20.0% by weight of solid polycaprolactone based on the total weight of the vinylidene chloride polymer composition, said vinylidene chloride polymer composition layer having been coextruded with at least one other layer.

2. The multilayer film according to Claim 1, wherein the vinylidene chloride polymer composition comprises from 0.5 to 10.0% by weight of solid polycaprolactone.

3. The multilayer film according to Claim 1, wherein the polycaprolactone has an average molecular weight in the range of 10,000 to 100,000.

4. The multilayer film according to Claim 1, wherein the vinylidene chloride polymer is a copolymer of vinylidene chloride and a monoethylenically unsaturated monomer chosen from the group consisting of alkyl acrylates and alkyl methacrylates, and blends therof.

5. The multilayer film according to Claim 1 wherein the vinylidene chloride copolymer composition further comprises inorganic additives selected from the group consisiting of zeolites, hydrotalcites, and alkaline earth metal oxides and hydroxides.

6. The multilayer film according to Claim 1, further comprising a heat-sealable layer and an abuse layer, said layers being positioned on opposide sides of the vinylidene chloride copolymer layer.

7. The multilayer film according to Claim 1 which is heat-shrinkable.

8. A package formed from a film according to any one of claims 1 to 7.

## Patentansprüche

1. Mehrschichtfolie, die mindestens eine Schicht einer Vinylidenchloridpolymerzusammensetzung umfasst, die bezogen auf das Gesamtgewicht der Vinylidenchloridpolymerzusammensetzung 0,5 bis 20,0 Gew.-% festes Polycaprolacton umfasst, wobei die Vinylidenchloridpolymerzusammensetzungsschicht mit mindestens einer anderen Schicht coextrudiert worden ist.

2. Mehrschichtfolie nach Anspruch 1, bei der die Vinylidenchloridpolymerzusammensetzung 0,5 bis 10,0 Gew.-% festes Polycaprolacton umfasst.

3. Mehrschichtfolie nach Anspruch 1, bei der das Polycaprolacton ein durchschnittliches Molekulargewicht im Bereich von 10.000 bis 100.000 hat.

4. Mehrschichtfolie nach Anspruch 1, bei der das Vinylidenchloridpolymer ein Copolymer von Vinylidenchlorid und monoethylenisch ungesättigtem Monomer ausgewählt aus der Gruppe bestehend aus Alkylacrylaten und Alkylmethacrylaten und Gemischen davon ist.

5. Mehrschichtfolie nach Anspruch 1, bei der die Vinylidenchloridcopolymerzusammensetzung ferner anorganische Additive ausgewählt aus der Gruppe bestehend aus Zeolithen, Hydrotalkiten und Erdalkalimetalloxiden und -hydroxiden umfasst.

6. Mehrschichtfolie nach Anspruch 1, die ferner eine heißsiegelbare Schicht und eine Schutzschicht umfasst, wobei die Schichten an gegenüberliegenden Seiten der Vinylidenchloridcopolymerschicht angeordnet sind.

7. Mehrschichtfolie nach Anspruch 1, die wärmeschrumpfbar ist.

8. Verpackung, die aus einer Folie gemäß einem der Ansprüche 1 bis 7 gebildet worden ist.

## Revendications

1. Film multicouche comprenant au moins une couche d'une composition d'un polymère de chlorure de vinylidène comprenant de 0,5 à 20,0% en poids de polycaprolactone solide en se basant sur le poids total de la composition du polymère de chlorure de vinylidène, ladite couche de la composition de polymère de chlorure de vinylidène ayant été coextrudée avec au moins une autre couche.

2. Film multicouche selon la Revendication 1, où la composition de polymère de chlorure de vinylidène comprend de 0,5 à 10,0% en poids de polycaprolactone solide.

3. Film multicouche selon la Revendication 1, où la polycaprolactone a un poids moléculaire moyen compris entre 10 000 et 100 000.

4. Film multicouche selon la Revendication 1, où le polymère de chlorure de vinylidène est un copolymère de chlorure de vinylidène et d'un monomère à insaturation monoéthylénique choisi dans le groupe consistant en acrylates d'alkyle et méthacrylates d'alkyle, et leurs mélanges.

5. Film multicouche selon la Revendication 1 où la composition du copolymère de chlorure de vinylidène comprend de plus des additifs inorganiques sélectionnés dans le groupe consistant en zéolites, hypotalcites, et oxydes de métaux alcalino-terreux et hydroxydes.

6. Film multicouche selon la Revendication 1, comprenant de plus une couche thermoscellable et une couche antiviolation, lesdites couches étant placées sur des faces opposées de la couche du copolymère de chlorure de vinylidène.

7. Film multicouche selon la Revendication 1 qui est thermorétractable.

8. Emballage formé à partir d'un film selon l'une quelconque des revendications 1 à 7.
